# NEUE EUROPÄISCHE PATENTSCHRIFT

(11) **EP 1 082 204 B2**
(45) Veröffentlichungstag und Bekanntmachung des Hinweises auf die Entscheidung über den Einspruch: **16.03.2011**
(45) Hinweis auf die Patenterteilung: 10.01.2007
(21) Anmeldenummer: 99932696.0
(22) Anmeldetag: 28.05.1999
(51) Int. Cl.: B29C 47/22, B65D 1/16

(54) **VERFAHREN UND VORRICHTUNG ZUR HERSTELLUNG VON KUNSTSTOFF-HOHLKÖRPERN**
METHOD AND DEVICE FOR PRODUCING PLASTIC HOLLOW BODIES
PROCEDE ET DISPOSITIF POUR PRODUIRE DES CORPS CREUX EN MATIERE PLASTIQUE

(30) Priorität: 28.05.1998 DE 29809489 U; 10.12.1998 US 111893 P
(43) Veröffentlichungstag der Anmeldung: 14.03.2001
(73) Patentinhaber: Mauser-Werke GmbH, 50321 Brühl (DE)
(72) Erfinder: PRZYTULLA, Dietmar, D-50170 Kerpen (DE); LIMA, William, Monmouth Beach, NJ 07750 (US)
(74) Vertreter: König, Gregor Sebastian
(86) Internationale Anmeldenummer: PCT/EP1999/003723
(87) Internationale Veröffentlichungsnummer: WO 1999/061219

(56) Entgegenhaltungen:
- DE-A1- 2 654 001
- DE-U1- 9 112 621
- US-A- 3 114 932
- US-A- 3 956 441
- US-A- 4 432 718
- US-A- 5 217 128

## Beschreibung

Die vorliegende Erfindung bezieht sich auf ein Verfahren und eine Vorrichtung zur Herstellung von Kunststoff-Hohlkörpern und auf einen danach hergestellten Kunststoff-Hohlkörper.

### Stand der Technik :

Bei der Herstellung von Kunststoff-Hohlkörpern wie z. B. zylinderförmigen Spundfässern oder Deckelfässern mit im wesentlichem kreisförmigem Deckel bzw. Oberboden ist man üblicherweise bestrebt, die Wanddicke des fertigen Behälters überall gleich dick bzw. gleich dünn auszuführen, denn eine dünne Stelle ist immer auch eine schwache Stelle eines Behälters. Dies bereitet insbesondere beim Blasformverfahren besondere Schwierigkeiten, weil der aus einer Extrusionsdüse ausgedrückte heiße schlauchförmige Vorformling sich zum einen schon beim Ausdrücken mit zunehmender Schlauchlänge und zunehmender Zeit durch sein Eigengewicht von selber verlängert d. h. streckt, wobei die Wanddicke des Vorformlings abnimmt und zum anderen beim Aufblasen in der Blasform - insbesondere in den Nahbereichen der Abquetschkanten quer zum Vorformling und 90° zur Blasform-Teilungsebene versetzt - stark unterschiedlichen Streckungsgraden ausgesetzt wird. Diesen unabdingbaren Phänomenen wird mit einer entsprechenden Düsensteuerung beim Ausdrücken des Schlauches gegengesteuert. Dafür sind jedoch eine besondere maschinelle Ausstattung der Extrusionseinrichtung mit doppelter Verstellbarkeit der Extrusions-Ringdüse und besondere Verfahrenskniffe und Steuerungsprogramme zur Einstellung partieller Wanddicken des ausgedrückten schlauchförmigen Vorformlings für die herzustellende, jeweils eigentümliche Behälterform erforderlich. Hierzu sind bereits verschiedene Düseneinstellungsvorrichtungen für eine partielle Wanddickensteuerung (PWDS) des Schlauches bekannt.

Aus der Patentschrift GB 1,107,628 ist bereits ein Verfahren und eine Vorrichtung bekannt, mittels derer rippenartige Verdickungen, d. h. in Umfangsrichtung betrachtet unterschiedliche Wanddicken in den extrudierten schlauchförmigen Vorformling eingeformt werden können. Der daraus fertig geblasene Hohlkörper weist dann auf seiner Innenseite vorhandene, in Axialrichtung verlaufende rippenartige Aussteifungen auf. Andere Einstellungsmöglichkeiten des Schlauches, wie z. B. eine kontinuierlich über seine Länge zunehmende Wanddicke, sind mit dieser bekannten ExtrusionsVorrichtung jedoch nicht möglich.

Kunststoff-Behälter, die im industriellen Einsatz für die Lagerung und den Transport von insbesondere gefährlichen flüssigen oder festen Füllgütern vorgesehen sind, müssen eine besondere Zulassung aufweisen und dafür entsprechende Prüfungstests (wie z. B. Kältefallprüfung, Innendrucktest, Stapelbelastbarkeit etc.) überstehen. Bei der Prüfung der Stapelbelastbarkeit werden die Kunststoff-Behälter bis zur Hohlkörperdeformation mit steigendem Druck belastet. Die Druckbelastung auf den Hohlkörper erzeugt eine Druckspannung in den vertikalen Seitenwänden. Diese Druckspannung führt zunächst zu einer gewissen Umfangsvergrößerung und bei zu hohen Druckspannungen in den Bereichen, die sich nicht nach außen deformieren können, zu einem Einbeulen nach innen. Die Stapelbelastung führt in den bodennahen Wandungsbereichen zu einem Ausbeulen (Elefantenfuß) bzw. Abrollen des Übergangs-Radius zwischen vertikaler Wandung und horizontalem Boden. In der Praxis treten beim Stapeln von Kunststoff-Fässern, insbesondere bei heiß abgefüllten flüssigen Füllgütern mit sofortiger Übereinanderstapelung in Dreifach- oder Vierfach-Stapeln oder bei einer Langzeitstapelung, oftmals diese Erscheinungsbilder von unzureichender Stapelbelastbarkeit mit Einbeulungen und Ausbeulungen auf.

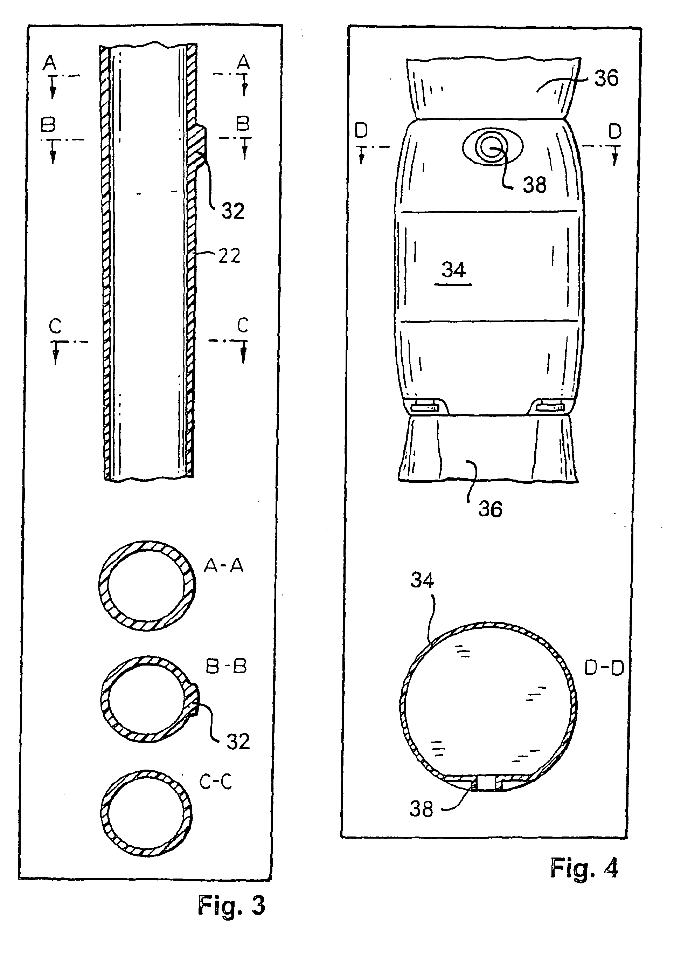

Aus der Patentschrift US-4 257 527 ist bereits ein großvolumiges Kunststoff-Faß (mit einem Fassungsvermögen von 55 US Gallonen = ca. 208 Liter) bekannt, bei dem zum Zwecke der Aussteifung des zylinderförmigen vertikalen Wandungsbereiches mehrere Längsrippen ausgebildet sind (vgl. dort Fig. 4). Diese Längsrippen werden allerdings ausschließlich durch eine entsprechende Ausgestaltung der Blasform mit axial verlaufenden Einbuchtungen während der Blasformgebung aus einem schlauchförmigen Vorformling mit konstant gleicher Wandungsdicke hergestellt. Dabei bleibt die Dicke der Behälterwandung in Umfangsrichtung unverändert gleich. An den Einmündungsstellen der vergleichsweise tief in die vertikale Behälterwandung eingeformten Längsrippen in den oberen bzw. unteren Umfangsring ergeben sich tiefe Taschen bzw. Nester, aus denen zähfließendes Füllgut nur schwer wieder herauszubringen ist, und die damit das Faß von einer Mehrfachverwendung ausschließen. Außerdem stellen diese Einmündungsstellen in den Umfangsringen eine konstruktive Schwachstelle für eine mechanische Belastung bei diesem Faß dar.

Des weiteren ist aus der US-Patentschrift 3 114 932 eine Blasvorrichtung zum Herstellen von Kunststoffbehältern bekannt, bei der oberhalb einer geteilten Blasform ein ebenfalls geteilter Düsenring angeordnet ist, in dessen konischen Innenraum die ebenfalls konische Spitze eines Blasdorns hineinragt. Die Eintauchtiefe des Blasdorns bestimmt dabei die Wanddicke des Schlauch-Vorformlings zwischen der Dornspitze und dem Düsenring. Mit Hilfe von Ausnehmungen in der Dornoberfläche oder/und in der Düsenringoberfläche lassen sich Dickstellen im extrudierten Schlauch einstellen; dies allerdings nur in Abhängigkeit von dem einzigen, während der Extrusion höhenverstellbaren Einstellelementes des mittigen Dornes.

Schließlich ist aus der US-Patentschrift 4 432 718 eine Blasvorrichtung bekannt, bei der ein Blasdorn den Düsenspalt von innen und ein schürzenartiges gehäusefestes Ringstück im Zusammenwirken mit einem axial verstellbaren Gehäusering von außen bestimmt. Der Gehäusering ist spaltseitig mit kreisförmig angeordneten L-förmigen Segmenten bestückt, deren Höhenlage sich mit Hilfe je einer Stellschraube verändern läßt, um auf diese Weise die Spaltkontur zu ändern. Die Höhenlage der Segmente bestimmt nicht nur die Spaltkontur, sondern gleichzeitig auch die Spaltbreite und damit die Wanddicke des Schlauch-Vorformlings. Demgemäß kommen nur die L-förmigen Segmente in Berührung mit dem Schlauch-Vorformling, während der Gehäusering als Träger für die Segmente fungiert.

### Aufgabenstellung:

Es ist Aufgabe der vorliegenden Erfindung, ein verbessertes Verfahren und eine entsprechende Vorrichtung zur Herstellung von Kunststoff-Hohlkörpern und insbesondere von Kunststoff-Behältem vorzuschlagen, die bei einer außenseitig unverändert glatten Behälterwandung bei gleichbleibendem Behältereinsatzgewicht - d.h. ohne Erhöhung des Materialeinsatzgewichtes im Vergleich zu einem entsprechenden herkömmlichen Behälter - eine höhere Stapelbelastbarkeit, insbesondere für eine Heißabfüllung von flüssigen Füllgütern, aufweisen.

### Lösung :

Das erfindungsgemäße Verfahren zur Herstellung von blasgeformten Kunststoff-Hohlkörpern auf einer Blasformmaschine mit Extruder, Extrusionskopf mit Umfangsverteiler und entsprechender Blasform, wobei während des Ausstoßens des schlauchförmigen Vorformlinges aus dem Extrusionskopf mittels Verstellung des Düse/Dornspaltes eine gezielte Einstellung der Wanddicke des ausgestoßenen Vorformlinges vorgenommen wird, zeichnet sich dadurch aus, daß durch eine sequenzielle oder gleichzeitige Einwirkung von drei unterschiedlich profilierten, separat verstellbaren Düse/Dornspalt-Einstellelementen eine gewünschte, über den Umfang und die Länge des schlauchförmigen Vorformlinges unterschiedliche DickDünn-Einstellung erreicht werden kann. Diese mehrfache Einstellmöglichkeit des Schlauches ist für großvolumige Hohlkörper wie industrielle Behälter (z. B. 220 Liter Fässer) von großer Bedeutung und bisher einmalig und in der Qualität der Behälter unerreicht.

Die so erzeugten Behälter mit vertikalen Wandungsbereichen, einem im wesentlichen horizontal verlaufenden Oberboden, bzw. einem festspannbaren Deckel, mit wenigstens einer darin angeordneten Einfüll- und Entleerungsöffnung und einem entsprechenden Unterboden weisen in den vertikalen Wandungsbereichen eine Vielzahl von voneinander beabstandeten Rippen ausschließlich auf der Innenseite der Wandung auf, wobei der Wandungsverlauf außenseitig gleichmäßig glatt und unverändert ausgebildet bleibt. Bei derartig ausgebildeten Kunststoff-Fässern ist die Stapelbelastbarkeit spürbar verbessert, wobei das Handling (z. B. das Ansetzen von Faßgreifern oder ein seitliches Rollen des Fasses) durch die außen glatte, unveränderte Faßwandung nicht beeinträchtigt wird.

In Ausgestaltung der Erfindung ist vorgesehen, daß benachbarte Wandungsbereiche abwechselnd eine unterschiedliche Dicke der Wandstärke aufweisen, wobei die Übergänge von dünnerer zu dickerer Wandung und umgekehrt auf der Wandungsinnenseite wellenförmig mit gleichmäßigem Kurvenverlauf zunehmend und abnehmend ausgebildet sind. In bevorzugter Ausführung ist dabei die Wandstärke der dickeren streifenförmigen Wandungsbereiche gleich dick und die Wandstärke der dünneren streifenförmigen Wandungsbereiche gleich dünn ausgebildet.

Der erfindungsgemäße Kunststoff-Behälter wird im Blasformverfahren hergestellt, wobei ein aus einer ringförmigen Extrusionsdüse ausgedrückter schlauchförmiger Vorformling in einer Blasform aufgeblasen wird, wobei der Vorformling mittels entsprechender Düsensteuerung auf eine in Axialrichtung gleichmäßig zunehmende Wanddicke eingestellt wird und mittels entsprechender Düsensteuerung in den Schlauchbereichen mit den höchsten Streckungsgraden für die in 90° zur Formteilungsebene liegenden Behälterbereiche des Ober- und Unterbodens auf eine größere Wanddicke eingestellt wird, und wobei mittels entsprechender Düsensteuerung im schlauchförmigen Vorformling innenseitig oder/und außenseitig ausgeprägte Längsrippen oder Dickstellen derart eingestellt werden, daß der in einer Blasform mit glatter Oberfläche für die seitlichen bzw. vertikalen Wandungsbereiche fertig geblasene Behälter wenigstens in der vertikalen Behälterwandung in Axiarichtung parallelverlaufende, benachbarte streifenförmige Wandungsbereiche mit abwechselnd dünnerer und dickerer Wandstärke aufweist (Ribbed Drum).

Mit den neuen erfindungsgemäßen Dreifach- bzw. Mehrfach-Düse/Dornspalt-Einstellelementen ergeben sich auf vorteilhafte Weise eine Vielzahl von neuen Anwendungsmöglichkeiten für großvolumige Kunststoff-Blasteile aller Art (z. B. KFZ-Zubehörteile o. ä.). Mit einer besonders dafür gestalteten Profilierung des dritten Düse/Dornspalt-Einstellelmentes DS II können auch besonders gut technische Blasformteile wie z. B. Kunststoff-Kraftstofftanks (KKB's) für die KFZ-Industrie in hervorragender Qualität hergestellt werden.

Der erfindungsgemäße Kunststoff-Behälter mit ausgesteiften vertikalen Wandungsbereichen kann als im wesentlichen geschlossener Hohlkörper (wie z. B. ein Spundfaß mit zwei seitlichen Spundöffnungen oder ein Schraubdeckelfaß = "L-Ring HOT" mit größerem Schraubdeckel) oder oben offener, mittels Deckel und Spannring verschließbarer Hohlkörper (wie z. B. ein Standard-Deckelfaß oder Vanguard FRH-Faß) ausgebildet sein.

Durch die erfindungsgemäße Ausgestaltung mit inneren Versteifungsrippen - bei sonst gleichbleibend mittels zweier herkömmlicher Einstellelementen eingestellter Wandstärke - ist beispielsweise in den USA für heiß abgefüllte Deckelfässer (Vanguard FRH-Faß, Füllguttemperatur bei Abfüllung ca. 180 Grad F = ca. 82° C) mit einem Faßkörpergewicht von ca. 10 kg sehr erfolgreich erreicht worden, daß die Fässer selbst nach dreitägigem Verbleib in einer Wärmekammer bei Temperaturen zwischen 140 bis 160 Grad F (= ca. 60° bis 71° C) bei einer anschließenden Stapelbelastung im Vierfach-Stapel keinerlei der sonst hierbei üblichen Deformationsanzeichen aufwiesen.

Die Axial-Rippen in den vertikalen Wandungsbereichen bewirken eine Erhöhung der Hohlkörpersteifigkeit, d. h. eine Erhöhung der Einbeulfestigkeit des Faßmantels und die Rippen in den axialen Radien im Übergangsbereich zum Faßober-/Unterboden haben eine Erhöhung der Abrollfestigkeit der Bodenradien zur Folge. Bei axialer Belastung der Hohlkörper mit erfindungsgemäßen axialen Längsrippen wird eine gleichmäßige Verteilung der Umfangsspannung erzielt. Nach Heißabfüllung und Abkühlung des flüssigen Füllgutes weisen Vanguard-Fässer mit rippenartig ausgesteifter Faßwandung ein erheblich verbessertes Verhalten bei Unterdruckbildung auf. Die nach wie vor glatte Faßkörperaußenwandung erlaubt eine gute Beschriftung oder das Aufsetzen von Etiketten. Außerdem ist ein einfaches Reinigen der Fässer für den Mehrwegeeinsatz gewährleistet.

Vorteile der Rippenausbildung : Die Rippen sind durch partielle Erhöhung der Wanddicke gebildet. Mit Erhöhung der Rippendicke steigt die Widerstandsfähigkeit des Hohlkörper-Mantels hinsichtlich eines Einknickens bzw. Einbeulens und Ausbeulens bzw. Abrollens in den Radien überproportional; das Widerstandsmoment erhöht sich in der dritten Potenz mit zuhnehmender Höhe bzw. Dicke der Rippen.

Die erfindungsgemäßen Fässer haben kein höheres Einsatzgewicht in Vergleich zu herkömmlichen Fässern, es wird lediglich das Material in der Behälterwandung "umverteilt", und zwar von jeweils einer "Dünnstelle" zu einer benachbarten "Dickstelle" (= Rippe).

Bisher wurde zur Vermeidung von Einbeulungen und Ausbeulungen bzw. einem Abrollen von bodenseitigen Hohlkörperbereichen die Wanddicke des Behälters insgesamt erhöht und somit das Materialeinsatzgewicht erhöht.

In verschiedenen Ausführungsformen, bei denen sich die rippenartigen Verdickungen ausschließlich auf der Innenseite der Hohlkörperwandung befinden, können die Rippen folgendermaßen angeordnet sein :
- in Axialrichtung nur über einen bestimmten Teilbereich oder
- über die gesamte Länge bzw. Höhe der zylinderförmigen Wandung,
- in den Radien bzw. Übergangsbereichen von den vertikalen in die horizontalen Boden- bzw. Deckelbereiche,
- in den scheibenförmigen Boden- bzw. Deckelbereichen.

Die Erfindung wird nachfolgend anhand von in den Zeichnungen schematisch dargestellten Ausführungsbeispielen näher erläutert und beschrieben. Es zeigen :
- Figur 1: einen erfindungsgemäßen Extrusionskopf in Teilschnittdarstellung,
- Figur 2: ein schematisches Wanddicken-Steuerungsprogramm für eine gezielte Wanddickeneinstellung des extrudierten schlauchförmigen Vorformlings,
- Figur 3: einen Längsschnitt mit drei Querschnitten durch einen Vorformling,
- Figur 4: einen fertig geblasenen Hohlkörper mit dazugehörigem Querschnitt,
- Figur 5: einen Teilquerschnitt durch einen schlauchförmigen Vorformling,
- Figur 6: einen Teilquerschnitt durch eine rippenartig versteifte Kanisterwandung,
- Figur 7: einen Teilquerschnitt durch eine rippenartig versteifte Faßwandung,
- Figur 8: einen Längsschnitt durch einen rippenartig versteiften Kanister,
- Figur 9: eine Draufsicht mit Teilquerschnitt durch den Kanister gem. Fig. 8,
- Figur 10: einen Längsschnitt durch einen anderen rippenartig versteiften Kanister,
- Figur 11: eine Draufsicht mit Teilquerschnitt durch den Kanister gem. Fig. 10,
- Figur 12: eine Seitenansicht mit Teilschnittdarstellung eines Standard-Deckelfasses mit rippenartig versteifter Faßwandung,
- Figur 13: zwei Teilquerschnitte durch die Faßwandung des Fasses gem. Fig. 12,
- Figur 14: eine Seitenansicht mit Teilschnittdarstellung eines Vanguard FRH-Deckelfasses mit rippenartig versteifter Faßwandung,
- Figur 15: zwei Teilquerschnitte durch die Faßwandung des Fasses gem. Fig. 14,
- Figur 16: eine Seitenansicht mit Teilschnittdarstellung eines geschlossenen L-Ringfasses mit rippenartig versteifter Faßwandung,
- Figur 17: zwei Teilquerschnitte durch die Faßwandung des Fasses gem. Fig. 16 und
- Figur 18: eine perspektivische Ansicht eines Kunststoff-Innenbehälters für einen Palettencontainer mit rippenartig versteifter Behälterwandung.

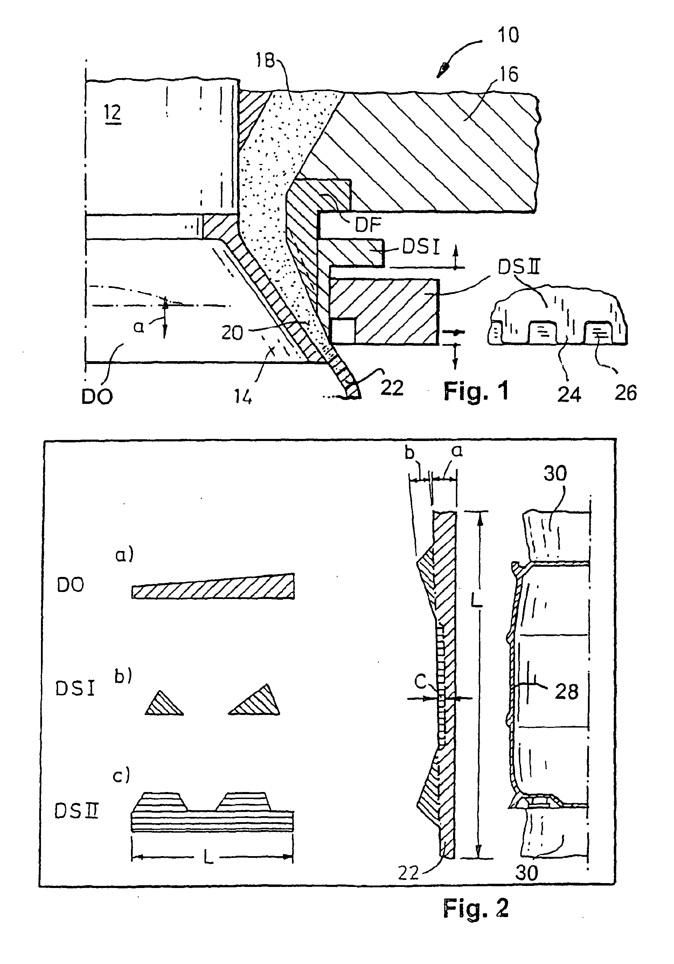

In Figur 1 ist ein Extrusionskopf 10 ausschnittsweise mit drei verstellbaren Düse/Dornspalt-Einstellelementen D0, DS I in Verbindung mit DF und DS II in der Betriebsposition "Düsenspalt geöffnet" mit Extrudieren eines schlauchförmigen Vorformlings 22 dargestellt. Mittig im Extrusionskopf 10 ist ein axial verstellbarer Dornhalter 12 angeordnet, an dessen Unterseite ein kegelstumpfartiger Dorn 14 als erstes Düse/Dornspalt-Einstellelement Dnull (= D 0) leicht lösbar bzw. auswechselbar befestigt ist. Außenseitig wird der Extrusionskopf von einem Gehäuse 16 umschlossen. Im Gehäuse 16 befindet sich ein hohlzylinderförmiger Speicherraum 18, in welchem das aus einem oder mehreren Extrudern in den Extrusionskopf geförderte schmelzflüssige Kunststoffmaterial umfangsverteilt und ggf. gespeichert wurde. Der Speicherraum 18 mündet in einen kreisringförmigen Düsenspalt 20, der innenseitig von dem Dorn 14 bzw. dem ersten Düse/Dornspalt-Einstellelement D 0 und außenseitig von einem gehäusefesten Düsen-Ringstück DF und zwei verstellbaren Düse/Dornspalt-Einstellelementen, nämlich dem Düsenschieber 1 = DS I und dem Düsenschieber 2 = DS II begrenzt wird. Wie der verstellbare Dorn 14 sind auch die axial verstellbaren Einstellelmente DS I und DS II leicht lösbar und damit leicht auswechselbar am Extrusionskopfgehäuse befestigt. Die axiale Verstellbarkeit bzw. exakte Positionseinstellung der verstellbaren Düse/Dornspalt-Einstellelemente kann z. B. hydraulisch oder elektromotorisch z. B. mittels kleiner Servomotoren erfolgen. Weiterhin ist auch das gehäusefeste Düsen-Ringstück DF leicht lösbar bzw. auswechselbar am Extrusionskopfgehäuse befestigt. Dies dient insbesondere dazu, bei einem Produktwechsel bzw. Austausch der nachgeschalteten Blasformhälften auch die auf das jeweilige Produkt zugeschnittenen und dementsprechend profilierten Ringstücke und Einstellelemente des Düsenspaltes schnell austauschen zu können.

Bei dem in Fig. 1 dargestellten Extrusionskopf 10 sind die Düse/Dornspalt-Einstellelemente in die Betriebsposition "Düsenspalt geöffnet" gefahren, d. h. der Dorn D 0 ist um ein Stück nach unten, der Düsenschieber = Einstellelemente DS I ist ganz nach unten und der Düsenschieber DS II ist nicht ganz nach oben gefahren. Durch entsprechende Pfeile sind die jeweiligen Weglängen zur Verstellbarkeit der Einstellelemente angedeutet. Bei dem Extrusionskopf 10 sind die den Düsenspalt begrenzenden Oberflächen des festen Düsen-Ringstückes DF und des Einstellelementes DS II profiliert und die den Düsenspalt begrenzenden Oberflächen des Dornes D 0 und des Einstellelementes DS I umlaufend glatt ausgebildet.

Im dargestellten Betriebszustand wird der Düsenspalt 20 außenseitig durch die untere innere, glatt umlaufende Kante des Düsenschiebers DS I und innenseitig von dem axial verstellbaren Dorn 14 begrenzt. Der austretende Schlauch 22 ist über den Umfang gleichmäßig dünn ausgebildet. Die Profilierungen des festen Düsen-Ringstückes DF und des Einstellelementes DS II sind nicht in Wirkeingriffsposition. Um die Profilierung des Düsen-Ringstückes DF wirksam werden zu lassen, wird einfach der Düsenschieber DS I mit seinem glatten unteren Rand hochgefahren. Um das Zahnprofil des Düsenschiebers DS II voll in Wirkeingriff zu bringen, kann der Düsenschieber DS II um ein Stück heruntergefahren werden. Das umlaufende Zahnprofil mit hierbei gleichmäßig voneinander beabstandeten Zähnen 24 und Zahnlücken 26 ist in nebenstehender Darstellung angedeutet. Bei Eingriff des Zahnprofils in den Schlauchquerschnitt wird das ausströmende Kunststoffmaterial von den eingreifenden Zähnen 24 zur Seite verdrängt und in die benachbarten Zahnlücken 26 gedrückt.

Für einen Wirkeingriff des gehäusefesten Ringstückes DF wird das Einstellelement DS I zusammen mit dem Einstellelement DS II um ein Stück nach oben gefahren (siehe Pfeil), so daß diese beiden Einstellelemente sich nicht in einer Wirkeingriffsposition mit dem austretenden schlauchförmigen Vorformling 22 befinden. Der Düsenspalt 20 wird dann durch den Dorn 14 und das profilierte feste Ringstück DF begrenzt. Der aus dem Düsenspalt austretende Schlauch 22 ist dann in Umfangsrichtung nicht mehr gleichmäßig dick ausgebildet, sondern ist in zwei sich gegenüberliegenden Bereichen (Formteilungsebene der Blasform) etwas dünner als in den dazu jeweils um 90° versetzt angeordneten Schlauchbereichen ausgebildet. Eine derartige doppel-ovale Einstellung des Düsenspaltes bzw. ovale Wanddickeneinstellung in gegenüberliegenden Bereichen des Schlauches ist bei Blasteilen mit flachem Ober- und Unterboden allgemein üblich. Dabei werden die beiden sich gegenüberliegenden Schlauchbereiche mit dickerer Wandung so zwischen die geöffneten Blasformhälften geführt, daß aus ihnen die um 90° zur Formteilungsebene liegenden horizontalen Behälterwandungsbereiche mit den größten Streckungsgraden bzw. Aufblaswegen des Kunststoffmateriales geblasen werden. Diese Maßnahme dient also zur Vergleichmäßigung der Wandstärke im fertigen Behälter, so daß die Behälterwandung in Eckbereichen mit hohen Streck- oder Reckgraden nicht dünner ausfällt als in den übrigen Wandungsteilen.

Mit der erfindungsgemäßen Vorrichtung (= Extrusionskopf) werden verschiedene, sich zum Teil überlagernde Einstellungen einer unterschiedlichen Wanddicke des schlauchförmigen Vorformlings vorgenommen, um die verfahrensbedingten Nachteile des Blasformverfahrens auszugleichen und im fertigen Blasteil (Behälter-Hohlkörper) eine möglichst gleichmäßige und einheitliche Wanddicke zu erzielen, die in vertikalen Wandungsbereichen von gleichmäßig voneinander beabstandeten Längsrippen (Verdickungsleisten) überlagert wird.

Die vorliegende Erfindung beinhaltet die technische Lehre, erstmalig unter Beibehaltung der zwei bisherigen Maßnahmen zur Erzielung einer gleichmäßigen Wanddicke im fertig geblasenen Hohlkörper eine dritte zusätzliche Maßnahme zu ergreifen, um bei einer Behälterherstellung gezielte gewollte und reproduzierbare Ungleichmäßigkeiten in der Wanddicke des fertig geblasenen Hohlkörpers erzeugen zu können. Verschiedene Ausgestaltungsvarianten des erfindungsgemäßen Extrusionskopfes sind in der parallelen PCT-Anmeldung PCT/EP99/01398 der selben Anmelderin näher beschrieben.

In Figur 2 ist ein Wanddicken-Steuerungsprogramm für eine gezielte Wanddickeneinstellung über die Länge des extrudierten Schlauches schematisch dargestellt. Links sind die Einzelprogramme a), b) und c) der Einstellelemente D 0, DS I und DS II abgebildet, in der Mitte ist eine Schlauchwandung des extrudierten Vorformlings und ganz rechts das geblasene Produkt, ein L-Ringfaß 28 in Überkopf-Position mit anhängenden Butzenstücken 30, gezeigt.

Mit dem Düsenschieber D 0 = axial verstellbarer Dorn 14 wird gemäß Programm a) durch langsames und stetiges Öffnen des Düsenquerschnittes eine über die Länge des Vorformlings 22 kontinuierliche Zunahme der Wanddicke eingestellt. Mit der zweiten Einstellvorrichtung - dem Düsenschieber DS I in Verbindung mit dem profilierten gehäusefesten Düsenring DF - wird gemäß Programm b) in den zwei Längenbereichen des extrudierten Vorformlings (im Nahbereich der späteren Abquetschkanten quer zum Schlauch) durch entsprechende Vergrößerung des Düsenquerschnittes mit Ausströmen von zusätzlichem Kunststoffmaterial (keine Verdrängung) eine partielle größere Wanddicke über seinen Umfang eingestellt, und mit der dritten Einstellvorrichtung - dem verstellbaren Düsenschieber DS II mit Zahn/Zahnlücken-Profilierung - wird gemäß Prorgramm c) eine Dick/Dünn-Einstellung der Wanddicke unter Ausbildung von Längsrippen durch partielles seitliches Verdrängen des Kunststoffmateriales im Düsenspalt vorgenommen. Über die Länge L des Schlauches 22 ergibt sich - wie in der Mitte dargestellt ist - eine sehr unterschiedliche, auf das jeweilige Produkt (hier das L-Ringfaß 28 mit Rippenausbildung im vertikalen Wandungsbereich) abgestellte Wanddickenführung.

Im Gegensatz zu herkömmlichen Einstellelemten, bei denen die partiellen Dickstellen im Schlauch für die größten Streckungsgrade durch Wegdrücken von Kunststoffmaterial im Düsenpalt für die Schlauchbereiche vorgenommen wird, die in die Formteilungsebene gelangen und damit verbunden eine Hinverschiebung des weggedrückten Materials in die Dickstellen-Bereiche 90° zur Formteilungsebene erfolgt, wird bei der erfindungsgemäßen Ausgestaltung der Extrusionseinrichtung durch Hochfahren des Düsenschiebers DS I die doppel-ovale Profilierung des festen Düsenringes DF frei und es kann zusätzlich dort mehr Kunststoffmaterial ausströmen, wo es benötigt wird. Das seitliche Wegdrücken über große Weglängen ist nachteilig, weil durch den Memory-Effekt des Kunststoffmateriales der Geradeauslauf des Schlauches beeinträchtigt wird und der Schlauchquerschnitt am Schlauchanfang unrund wird. Dadurch gibt es häufig Maschinenstörungen, wenn der Schlauchanfang nicht sauber über den Blasdorn und Spreizdorn geführt wird.

Zur Verdeutlichung einer Sonderprofilierung ist in Figur 3 ein vereinfachter schlauchförmiger Vorformling 22 oben in Längsschnitt- und darunter in dreifacher Querschnittsdarstellung für einen besonderen geblasenen Hohlkörper, nämlich einen Kunststoff-Kraftstoff-Behälter (KKB) 34 gezeigt. Der schlauchförmige Vorformling 22 ist oben gemäß Schnitt A-A dicker als unten gemäß Schnitt C-C. Die partiellen Dickstellen gemäß Teil-Programm b) mittels Düsenschieber DS I sind der Einfachheit halber weggelassen. Der Schnitt B-B verdeutlicht eine einzelne zusätzliche Dickstelle 32, die für die Ausbildung eines seitlichen Öffnungsstutzens im fertigen Behälter vorgesehen ist. Der Kunststoff-Kraftstoff-Behälter 34 mit seitlichem Öffnungssutzen 38 und noch anhängenden Butzenstücken 36 ist in Figur 4 oben in Seitenansicht und darunter im Querschnitt dargestellt ist.

Mit dem erfindungsgemäßen Extrusionskopf mit drei separaten Einstell-Systemen können gerade solche Sonderprofilierungen mit partiellen Materialanhäufungen (vgl. Schnitt B-B in Fig 3) wie sie z. B. für den KKB 34 im Bereich einer Stutzenöffnung (vgl. Schnitt D-D in Fig. 4) benötigt wird, besonders gut gefahren bzw. erzeugt werden.

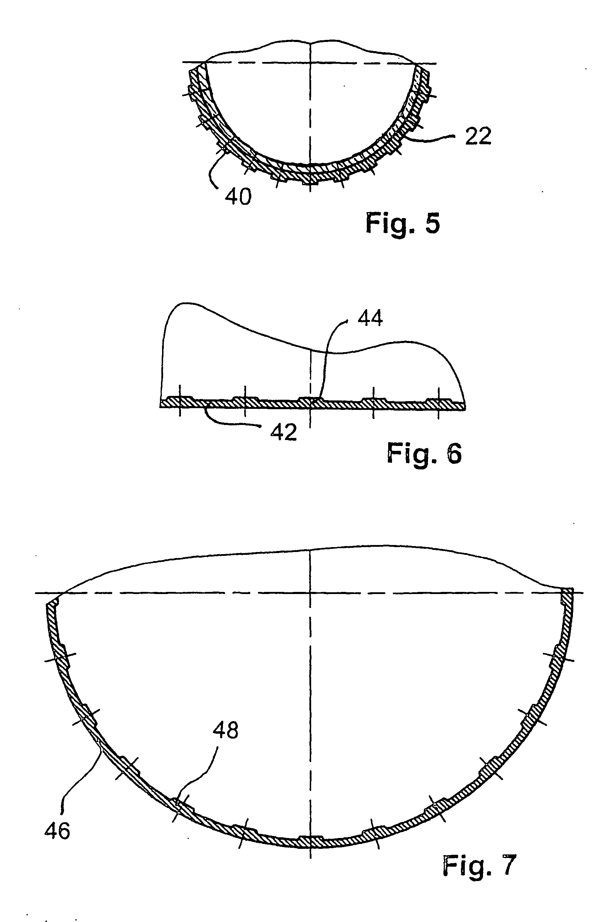

In Figur 5 ist in Teilquerschnittsansicht ein schlauchförmiger Vorformling 22 mit gleichmäßig voneinander beabstandeten Außenrippen 40 dargestellt. Beim Aufblasen dieses Schlauches zu einem fertigen Hohlkörper legt sich der verrippte Schlauch 22 an die glatte Innenwandung der Blasform an und die Außenrippen 40 des Schlauches prägen sich auf der Innenwandung des fertigen Höhlkörpers aus. In Figur 6 ist ein entsprechender Teilschnitt einer geraden Behälterwandung 42 (z. B. von einem Kanister oder einem Innenbehälter für einen Palettencontainer IBC) mit Innenrippen 44 dargestellt. Figur 7 zeigt ein entsprechendes Teilstück einer zylinderförmigen Behälterwandung für ein Vanguard-Deckelfaß 46 mit Innenrippen 48.

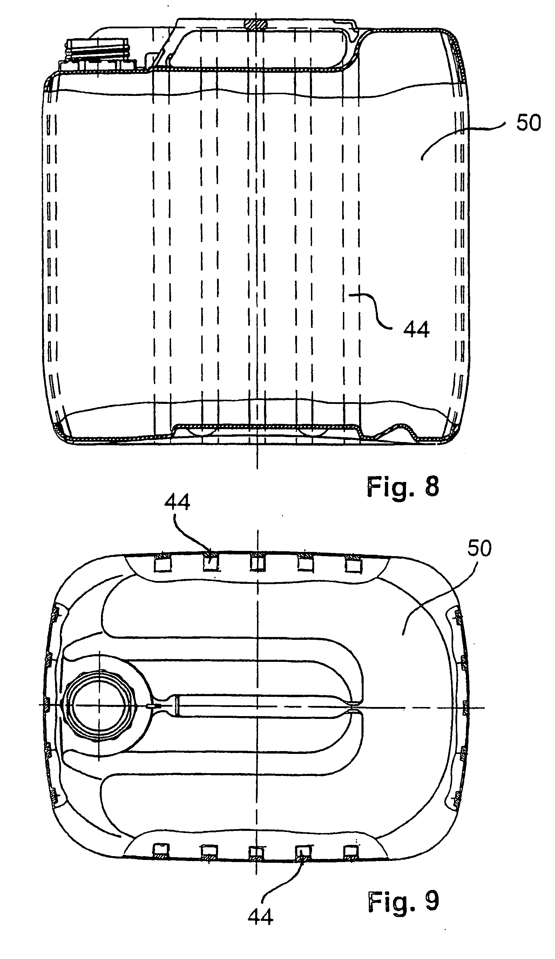

Figur 8 zeigt als Ausführungsbeispiel einen Kanister 50 in Teilschnittdarstellung mit Innenrippen 44 in den ebenen bzw. geraden Wandungsbereichen. Aus der Draufsicht auf diesen Kanister in Figur 9 ist in den Teilschnittbereichen erkennbar, daß die Axialrippen 44 um ein kleines Stück horizontal in den unteren Bodenbereich des Kanisters einlaufen, während die Eckbereiche des Kanisters frei von einer Rippenausbildung sind. Die Axialrippen 44 steifen die geraden Wandungsteile gegen übermäßiges Ausbeulen bei auftretendem Innendruck im Kanisterinneren aus.

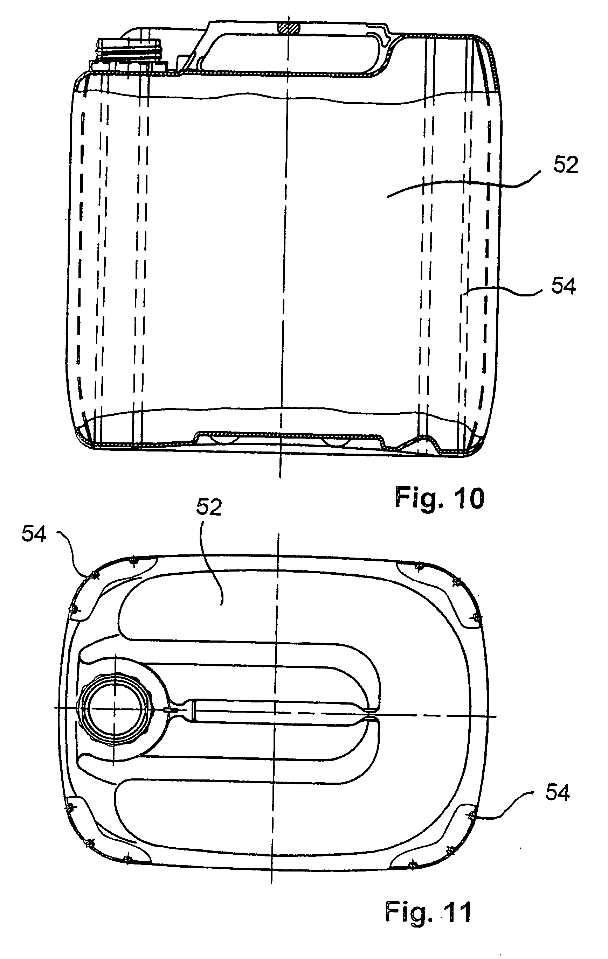

Bei einem anderen in Figur 10 dargestellten Kanister 52 sind im Gegensatz dazu lediglich in den Eckbereichen entsprechende Innenrippen 54 ausgebildet. Diese Eckrippen 54 sind in der Draufsicht in Figur 11 in den teilgeschnittenen Eckbereichen ersichtlich; sie erhöhen die Stapelbelastbarkeit und vermindern das bodenseitige Ausbeulen (Elefantenfüße) der Eckbereiche eines solchen Kanisters.

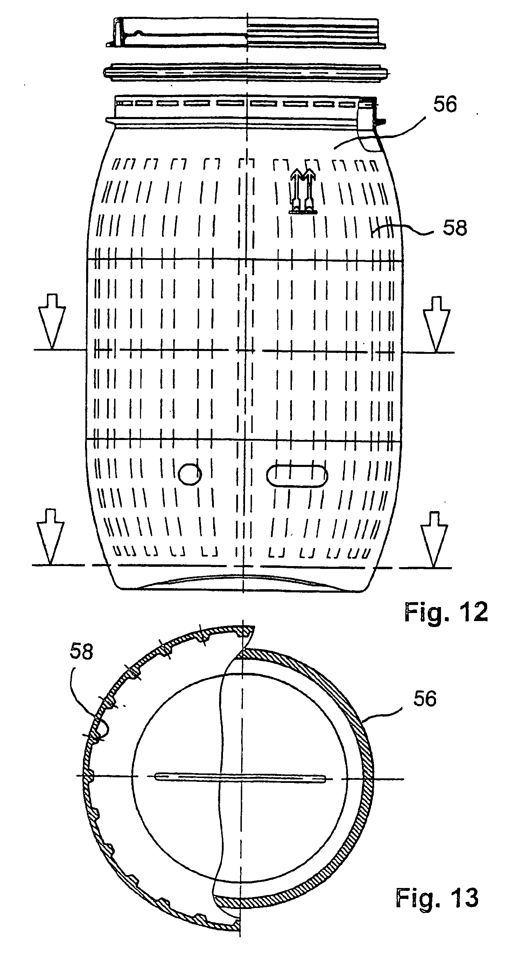

In Figur 12 ist mit der Bezugsziffer 56 ein Deckelfaß in der weltweit bekannten Ausführung des 1975 von Mauser entwickelten Standard-Deckelfasses bezeichnet. In dem vertikalen Wandungsbereich des Faßkörpers sind eine Vielzahl von streifenartigen, voneinander beabstandeten Rippen 58 angedeutet, die bis in die bauchigen Faßkörperbereiche hineinlaufen. Die Querschnittsansicht in Figur 13 zeigt auf der linken Hälfte einen Schnitt durch die Faßwandung mit den Innenrippen 58 und auf der rechten Bildhälfte einen Schnitt durch die Faßwandung ohne Rippen kurz über dem unteren Faßboden.

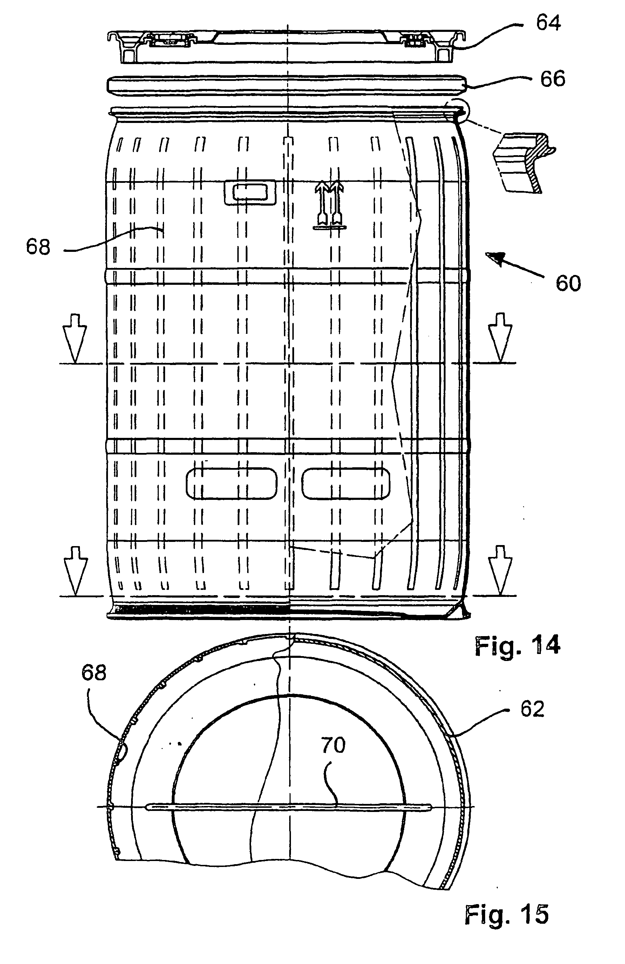

Figur 14 zeigt in Seitenansicht die bevorzugte Ausführung eines Vanguard FRH-Deckelfasses 60 mit Faßkörper 62, Faßdeckel 64 und Spannringverschluß 66. Der Faßkörper 62 ist mit einer Vielzahl von parallelverlaufenden streifenartigen Rippen 68 versehen, die ausschließlich auf der Innenseite der Wandung vorhanden sind, wobei der Wandungsverlauf außenseitig gleichmäßig glatt und unverändert ausgebildet ist.

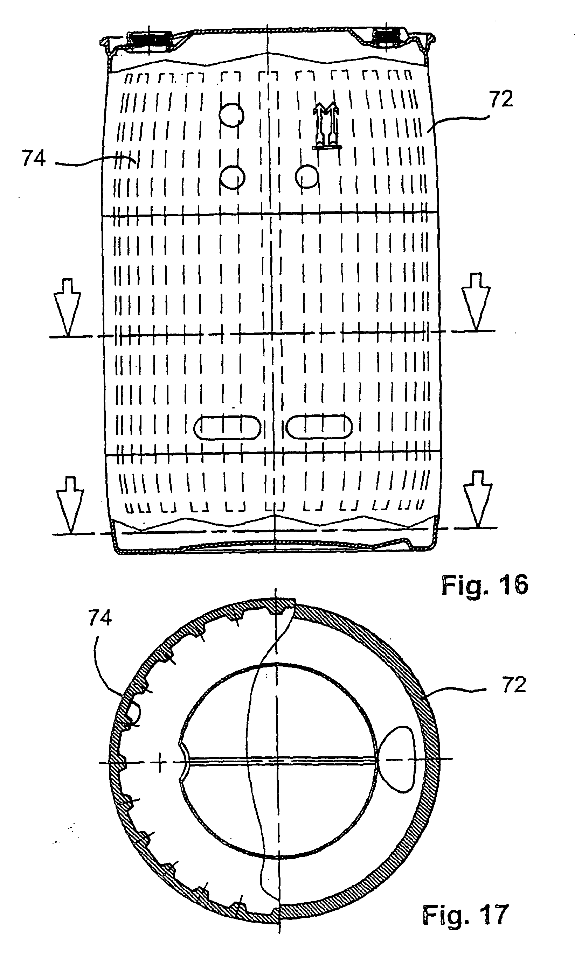

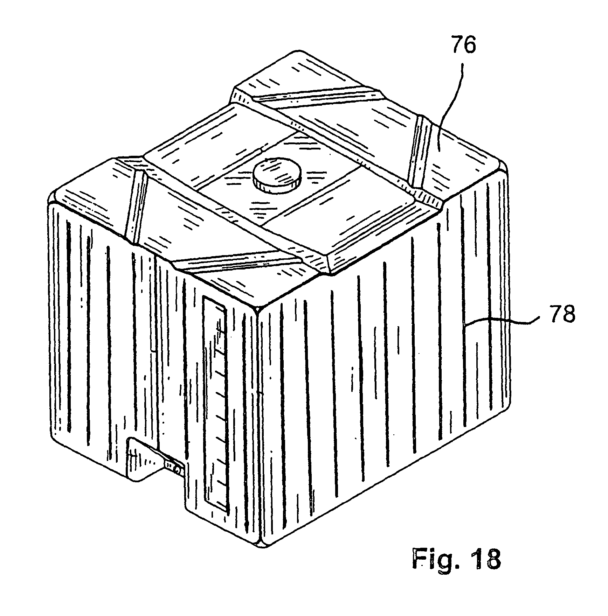

Die Querschnittsdarstellung in Figur 15 zeigt in der linken Bildhälfte wiederum die Faßkörperwandung mit Innenrippen 68 und in der rechten Bildhälfte den Wandungsbereich ohne Rippen ganz dicht über dem Faßunterboden. Im Faßboden ist eine querverlaufende Linie erkennbar, die die Quetschnaht 70 des schlauchförmigen Vorformlings in Formteilungsebene der Blasform darstellt. Als weiteres Ausführungsbeispiel ist in Figur 16 ein geschlossenes Spundfaß 72 mit zwei seitlichen Spundstutzen im Faßoberboden und Innenrippen 74 in den vertikalen Wandungsbereichen dargestellt. Bei einem solchen L-Ringfaß erhöhen die in Figur 17 ersichtlichen Innenrippen 74 die Stapelbelastbarkeit des Faßkörpers, insbesondere bei heiß abgefüllten flüssigen Füllgütern. Als letztes Ausführungsbeispiel ist in Figur 18 der Kunststoff-Innenbehälter 76 für einen Palettencontainer dargestellt. Die hier angedeuteten, in den ebenen Wandungsbereichen ausgebildeten Innenrippen 78 steifen diese Wandungsbereiche aus und verhindern bei leeren Behältern ein Einbeulen der Wandung nach innen.

Vergleicht man z. B. ein konventionelles Kunststoff-Faß mit einem Einsatzgewicht von 10 kg mit einem erfindungsgemäßen Kunststoff-Faß mit einem Einsatzgewicht von 10 kg, so ist bei beiden die Querschnittsfläche des extrudierten Schlauches gleich groß. Bei dem Schlauch für das erfindungsgemäße Kunststoff-Faß wurde lediglich im Bereich einer Dünnstelle das Kunststoffmaterial nach rechts und links in den Bereich der beiden benachbarten Dickstellen bzw. Rippen verdrängt bzw. umverteilt. Der große Vorteil der vorliegenden Erfindung besteht darin, daß die jeweilige Blasform für ein erfindungsgemäßes Kunststoff-Faß völlig unverändert bleibt und nach wie vor eine glatte innere Oberfläche aufweist.

Bei einem 55 Gallonen Vanguard-Deckelfaß beträgt der Faßdurchmesser ca. 590 mm. Die Dickstellen bzw. Rippen weisen eine Breite von ca. 25 mm und eine Wandstärke von ca. 5,0 mm auf, während die Dünnstellen = normale Wandstärke eine Breite von ca. 50 mm und eine Wandstärke von ca.3,2 mm aufweisen. Der Abstand (Dünnstelle) zweier benachbarter Rippen soll wenigstens etwa das Doppelte oder ein Mehrfaches der Breite einer Rippe betragen.

Für einen Durchmesser von ca. 590 mm beträgt die bevorzugte Anzahl der Rippen ca. 32. Dabei sind für Behälter mit kleineren Durchmessern eine kleinere Anzahl und für Behälter mit größeren Durchmessern eine größere Anzahl der inneren Versteifungsrippen zu wählen. Bei optimaler Auswahl der Parameter kann eine Erhöhung der Stapelbelastbarkeit der erfindungsgemäßen Behälter - insbesondere bei der Verwendung für heißabgefüllte flüssige Füllgüter - im Vergleich zu konventionellen Behältern in der Größenordnung von 5 % bis 20 % erzielt werden.

Die Erfindung läßt sich gleichwohl auf Behälter mit kreisförmiger Querschnittsfläche wie auch auf Behälter mit rechteckförmiger Querschnittsfläche (z. B. Fassett = großer Kanister, Rechteck-Faß) anwenden.

Bei geschlossenen Spundfässern (z. B. L-Ring Fässer) mit am oberen Rand der Faßwandung umlaufendem massiven Handlingsring (= L-Ring) verlaufen die streifenartigen Rippen in der vertikalen Faßwandung vorzugsweise nur bis kurz unterhalb des Handlingsringes und nicht bis in den L-Ring oder den Oberboden hinein. Der Abstand des Endes der Rippen (= Auslauf der Verdickung) vom Handlingsring sollte zwischen 20 mm und 60 mm betragen.

Für einen großvolumigen Behälter wie z. B. ein 220 Liter L-Ringfaß soll die Wandstärke in den dünnen Wandungsbereichen zwischen den Rippen etwa 2 mm bis 3,5 mm und die Wandstärke der Rippen etwa 3,0 bis 6 mm betragen. An keiner Stelle soll die Wandstärke weniger als 2,0 mm betragen.

In Umfamgsrichtung betrachtet soll die Breite einer Rippe ca. 5 mm bis 20 mm und die Breite der dünneren Faßwandung dazwischen etwa 20 mm bis 80 mm betragen.

### Bezugsziffernliste

- 10: Extrusionskopf
- 12: Dornhalter D 0
- 14: Dorn zentralmittig
- 16: Gehäuse
- 18: Speicherraum
- 20: Düsenspalt
- 22: schlauchförm. Vorformling
- 24: Zahn
- 26: Zahnlücke
- 28: L-Ringfaß
- 30: Butzenstücke
- 32: Dickstelle
- 34: K'stoffkraftstoffbehälter KKB
- 36: Butzenstücke
- 38: Öffnungsstutzen
- 40: Außenrippen (22)
- 42: gerade Wandung
- 44: Innenrippen (42)
- 46: Deckelfaßkörper
- 48: Innenrippen (46)
- 50: Kanister gerade
- 52: Kanister ecke
- 54: Eck-Rippen (52)
- 56: Standard-Deckelfaß
- 58: Innenippen (56
- 60: Vanguard-Deckelfaß
- 62: Faßkörper
- 64: Faßdeckel
- 66: Spannring
- 68: FRH-Rippen
- 70: Quetschnaht
- 72: Spundfaß
- 74: Innenrippen (72)
- 76: Innenbehälter IBC
- 78: Innenrippen (76)

### Düse/Dornspalt-Einstellelemente :

- D 0: zentraler Dorn
- D F: gehäusefestes profiliertes Ringstück
- DS I: Düsenschieber I mit Glattrand
- DS II: profilierter Düsenschieber II

## Patentansprüche

1. Verfahren zur Herstellung von blasgeformten Kunststoff-Hohlkörpern, bei dem ein verformbarer heißer schlauchförmiger Vorformling (22) aus thermoplastischem Kunststoff aus einer verstellbaren Ringdüse einer Extrusionseinrichtung (10) extrudiert und zwischen die geöffneten Blasformhälften einer Blasform geführt wird, in welcher der Vorformling nach Schließen der Blasform unter Einwirkung eines gasförmigen Druckmediums zum fertigen Hohlkörper aufgeblasen wird, wobei während der Extrusion des schlauchförmigen Vorformlings (22)
- mittels eines innerhalb des Düsenspalts (20) angeordneten ersten Einstellelements (DO) an der verstellbaren Ringdüse der Extrusionseinrichtung (10) eine Wanddickenzunahme des extrudierten Vorformlings (22) über seine Länge vorgenommen wird,
- mittels eines den Düsenspalt umgebenden zweiten Einstellelements (DS I) an der verstellbaren Ringdüse der Extrusionseinrichtung (10) in wenigstens zwei unterschiedlichen Längenbereichen eine partielle unterschiedliche Wanddickeneinstellung des extrudierten Vorformlings (22) über seinen Umfang vorgenommen wird, **dadurch gekennzeichnet, daß**
- mittels eines weiteren, den Düsenspalt umgebenden dritten Einstellelements (DS II) an der verstellbaren Ringdüse der Extrusionseinrichtung (10) eine Sonderprofilierung mit einer dritten Dick/Dünn-Einstellung der Wanddicke des extrudierten Vorformlings (22) an vorgebbaren Stellen seiner Länge oder/und seines Umfanges derart vorgenommen wird, daß während des Ausstoßens des schlauchförmigen Vorformlings (22) durch eine sequenzielle oder gleichzeitige Einwirkung von drei unterschiedlich profilierten Einstellelementen (D O; DS I; DS II) verschiedene, sich zum Teil überlagernde Einstellungen einer unterschiedlichen Wanddicke des schlauchförmigen Vorformlings (22) vorgenommen werden.

2. Verfahren nach Anspruch 1, **dadurch gekennzeichnet, daß**
- mittels der ersten Einstellvorrichtung (D 0) durch langsames und stetiges Öffnen des Düsenquerschnittes eine über seine Länge kontinuierliche Zunahme der Wanddicke des extrudierten Vorformlings (22) vorgenommen wird,
- mittels der zweiten Einstellvorrichtung (DS I) in wenigstens zwei unterschiedlichen Längenbereichen des extrudierten Vorformlings (22) durch entsprechende Vergrößerung des Düsenquerschnittes mit Ausströmen von zusätzlichem Kunststoffmaterial eine partielle größere Wanddicke über seinen Umfang eingestellt wird, und
- mittels der dritten Einstellvorrichtung (DS II) durch Wirkeingriff des verstellbaren Düsenschiebers DS II mit Zahn/Zahnlücken-Profilierung eine Dick/Dünn-Einstellung der Wanddicke unter Ausbildung von Längsrippen durch partielles seitliches Verdrängen des Kunststoffmateriales im Düsenspalt vorgenommen wird.

3. Verfahren nach Anspruch 1, **dadurch gekennzeichnet, daß**
- mittels der ersten Einstellvorrichtung (D 0) durch langsames und stetiges Öffnen des Düsenquerschnittes eine über seine Länge kontinuierliche Zunahme der Wanddicke des extrudierten Vorformlings (22) vorgenommen wird,
- mittels der zweiten Einstellvorrichtung (DS I) in wenigstens zwei unterschiedlichen Längenbereichen des extrudierten Vorformlings (22) durch entsprechende Vergörßerung des Düsenquerschnittes mit Ausströmen von zusätzlichem Kunststoffmaterial eine partielle größere Wanddicke über seinen Umfang eingestellt wird, und
- mittels der dritten Einstellvorrichtung (DS II) durch Öffnen des verstellbaren Düsenschiebers DS II mit Sonder-Profilierung eine zusätzliche Dick-Einstellung der Wanddicke durch partielle Vergrößerung des Düsenquerschnittes mit Ausströmen von zusätzlichem Kunststoffmaterial eine partielle Vergrößerung der Wanddicke unter Ausbildung wenigstens einer weiteren Dickstelle an wenigstens einer vorgebbaren Stelle seiner Länger oder/und seines Umfanges vorgenommen wird.

4. Vorrichtung zur Herstellung von blasgeformten Kunststoff-Hohlkörpern, mit einem Extrusionskopf (10) zur Erzeugung eines schlauchförmigen Vorformlinges (22), mit einer verstellbaren ringförmigen Schlauchaustrittsdüse mit wenigstens drei separaten, unterschiedlich profilierten, austauschbaren Düse/Dornspalt-Einstellelementen, die eine gezielte Einstellung des Düsenspaltes zur Veränderung der Wanddicke des austretenden Vorformlinges. (22) ermöglichen, **dadurch gekennzeichnet, daß** ein erstes Düseneinstellelement (D O) innerhalb des Ringspalts sowie ein zweites und ein drittes Einstellelement (DS I; DS II) außerhalb des Düsenspalts angeordnet sind, wobei die drei Einstellelemente (D O, DS I, DS II) einzeln verstellbar ausgebildet und dazu mit jeweils einem separaten Verstellantrieb ausgestattet sind.

5. Vorrichtung nach Anspruch 4 **dadurch gekennzeichnet, daß** das dritte zusätzliche Einstellelement (DS II) für die Einstellung einer Sonderprofilierung unterhalb des zweiten Einstellelements (DS I) angeordnet und als letzte Wanddickenbeeinflussung auf den austretenden Schlauch (22) einwirkbar ist.

6. Vorrichtung nach Anspruch 4 oder 5, **dadurch gekennzeichnet, daß** die untere innere Kante des dritten Einstellelementes (DS II), die mit dem austretenden Vorformling (22) in Eingriff bringbar ist; etwa in gleicher Höhe oder geringfügig oberhalb der unteren äußeren Kante des zentralen Dornes (D 0) angeordnet ist.

7. Verfahren zum Herstellen von Hohlkörpern aus thermoplastischem Kunststoff nach Anspruch 1, **dadurch gekennzeichnet, daß** ein aus einer ringförmigen Extrusionsdüse ausgedrückter schlauchförmiger Vorformling (22) in einer Blasform aufgeblasen wird, wobei der schlauchförmige Vorformling (22) mittels entsprechender Düsensteuerung in Axialrichtung auf eine gleichmäßig zunehmende Wanddicke eingestellt ist, mittels entsprechender Düsensteuerung in den Schlauchbereichen mit den höchsten Streckungsgraden für die in 90° zur Formteilungsebene liegenden Behälterbereiche des Ober- und Unterbodens auf eine größere Wanddicke eingestellt ist, und wobei mittels entsprechender Düsensteuerung im schlauchförmigen Vorformling (22) innenseitig oder/und außenseitig ausgeprägte Längsrippen derart eingestellt sind, daß der in einer Blasform mit glatter Oberfläche für die seitlichen bzw. vertikalen Wandungsbereiche fertig geblasene Behälter wenigstens in der vertikalen Behälterwandung in Axialrichtung parallelverlaufende, benachbarte streifenförmige Wandungsbereiche mit unterschiedlicher Dicke der Wandstärke aufweist.

8. Verfahren zum Herstellen von Hohlkörpern aus thermoplastischem Kunststoff nach Anspruch 1, **dadurch gekennzeichnet, daß** ein aus einer ringförmigen Extrusionsdüse ausgedrückter schlauchförmiger Vorformling (22) in einer Blasform aufgeblasen wird, wobei der schlauchförmige Vorformling mittels entsprechender Düsensteuerung in Axialrichtung auf eine gleichmäßig zunehmende Wanddicke eingestellt ist, mittels entsprechender Düsensteuerung in den Schlauchbereichen mit den höchsten Streckungsgraden für die in 90° zur Formteilungsebene liegenden Behälterbereiche des Ober- und Unterbodens auf eine größere Wanddicke eingestellt ist, um im fertig geblasenen Hohlkörper eine weitestgehende gleichdicke Wandstärke zu erzielen, und wobei mittels einer entsprechenden dritten Düsensteuerung im schlauchförmigen Vorformling (22) wenigstens eine weitere partielle Vergrößerung der Schlauchwanddicke eingestellt ist, um im fertig geblasenen Hohlkörper im axialen bzw. vertikalen Wandungsbereich eine Dickstelle mit einem zusätzlichen Bedarf an Kunststoffmaterial wie z.B. für einen seitlichen Spundöffnungsstutzen bei einem Kunststoff-Kraftstoffbehälter (KKB) oder eine seitliche Griffausbildung bzw. Tragegriffbefestigung bei einem Hochformatkanister zu erzielen.

9. Verfahren nach Anspruch 7 oder 8, **dadurch gekennzeichnet, daß** zumindest in den vertikalen Wandungen eine Vielzahl von voneinander beabstandeten Rippen (48) ausschließlich auf der Innenseite der Wandung ausgebildet sind, wobei die Wandung außen gleichmäßig glatt ausgebildet ist.

10. Verfahren nach Anspruch 7, 8 oder 9 **dadurch gekennzeichnet, daß** benachbarte Wandungsbereiche abwechselnd eine unterschiedliche Dicke der Wandstärke aufweisen, wobei die Übergänge von dünnerer zur dickeren Wandung und umgekehrt auf der Wandungsinnenseite wellenförmig mit gleichmäßigem Kurvenverlauf zunehmend und abnehmend ausgebildet sind.

11. Verfahren nach Anspruch 7, 8, 9 oder 10, **dadurch gekennzeichnet, daß** die Wandstärke der dickeren streifenförmigen Wandungsbereiche gleich dick und die Wandstärke der dünneren streifenförmigen Wandungsbereiche gleich dünn ausgebildet ist.

12. Verfahren nach einem der vorhergehenden Ansprüche 7 bis 11, **dadurch gekennzeichnet, daß** die Breite eines dünneren Wandungsbereiches zwischen zwei Rippen etwa wenigstens das Doppelte oder ein Mehrfaches der Breite einer Rippe beträgt.

13. Verfahren nach einem der vorhergehenden Ansprüche 7 bis 12, **dadurch gekennzeichnet, daß** das Verhältnis der Höhen von Erhebungen A zu den dünneren Wandungsbereichen B zwischen A(H) : B(H) = 1,1 : 1 bis 1,5 : 1 beträgt.

14. Verfahren nach einem der vorhergehenden Ansprüche 7 bis 13, **dadurch gekennzeichnet, daß** die Anzahl der Rippen bei einem Behälterdurchmesser von ca. 590 mm zwischen 20 bis 60, vorzugsweise ca. 32 beträgt.

15. Verfahren nach einem der vorhergehenden Ansprüche 7 bis 14, **dadurch gekennzeichnet, daß** bei rechteckförmigen Behältern wenigstens eine oder mehrere Rippen in jedem Eckbereich ausgebildet sind, wobei die Rippen über die vertikale Wandung hinaus nach oben oder/und unten in die horizontalen Behälterbereiche hinein verlängert ausgebildet sind.

16. Verfahren nach einem der vorhergehenden Ansprüche 7 bis 14, **dadurch gekennzeichnet, daß** bei rechteckförmigen Behältern wenigstens eine oder mehrere Rippen (78) in jedem ebenen Wandungsbereich mit Ausnahme der Eckbereiche ausgebildet sind, wobei die Rippen über die vertikale Wandung hinaus nach oben oder/und unten in die horizontalen Behälterbereiche hinein verlängert ausgebildet sind.

## Claims

1. Method for producing blow-moulded plastic hollow bodies, in which a deformable hot tubular preform (22) of thermoplastic material is extruded from an adjustable annular die of an extrusion device (10) and guided between the opened halves of a blow mould, in which the preform is inflated under the effect of a gaseous pressure medium after the blow mould is closed to form the finished hollow body, the following being performed during the extrusion of the tubular preform (22)
- a wall thickness increase of the extruded preform (22) over its length by means of a first setting element (D 0), arranged within the die gap (20), on the adjustable annular die of the extrusion device (10),
- a partial different wall thickness setting of the extruded preform (22) over its circumference in at least two different regions of its length by means of a second setting element (DS I), surrounding the die gap, on the adjustable annular die of the extrusion device (10), **characterized in that**
- a special profiling is performed with a third thick/thin setting of the wall thickness of the extruded preform (22) at predeterminable points of its length and/or of its circumference by means of a further, third setting element (DS II), surrounding the die gap, on the adjustable annular die of the extrusion device (10) in such a way that various, partly overlapping settings of a different wall thickness of the tubular preform (22) are performed during the output of the tubular preform (22) by a sequential or simultaneous action of three differently profiled setting elements (D 0, DS I, DS II).

2. Method according to Claim 1, **characterized in that**
- an increase of the wall thickness of the extruded preform (22) is performed continuously over its length by means of the first setting device (D 0) by slow, steady opening of the die cross section,
- a partial greater wall thickness is set over the circumference of the extruded preform (22) by means of the second setting device (DS I) in at least two different regions of its length by corresponding enlargement of the die cross section with additional polymer material flowing out, and
- a thick/thin setting of the wall thickness is performed by means of the third setting device (DS II) by active engagement of the adjustable die slide DS II with tooth/tooth gap profiling, while forming longitudinal ribs by partial lateral displacement of the polymer material in the die gap.

3. Method according to Claim 1, **characterized in that**
- an increase of the wall thickness of the extruded preform (22) is performed continuously over its length by means of the first setting device (D 0) by slow, steady opening of the die cross section,
- a partial greater wall thickness is set over the circumference of the extruded preform (22) by means of the second setting device (DS I) in at least two different regions of its length by corresponding enlargement of the die cross section with additional polymer material flowing out, and
- an additional thick setting of the wall thickness is performed by means of the third setting device (DS II) by opening the adjustable die slide DS II with special profiling by partial enlargement of the die cross section with additional polymer material flowing out; a partial enlargement of the wall thickness while forming at least one further thick point at at least one predeterminable point of its length and/or its circumference.

4. Device for producing blow-moulded plastic hollow bodies, with an extrusion head (10) for producing a tubular preform (22), with an adjustable annular parison outlet die with at least three separate, differently profiled, exchangeable die/mandrel gap setting elements which permit a specifically selective setting of the die gap for changing the wall thickness of the emerging preform (22), **characterized in that** a first die setting element (D 0) is arranged within the annular gap and a second and a third setting element (DS I; DS II) are arranged outside the die gap, the three setting elements (D 0, DS I, DS II) being individually adjustably formed and for this purpose equipped in each case with a separate adjusting drive.

5. Device according to Claim 4, **characterized in that** the third additional setting element (DS II) for the setting of a special profiling is arranged underneath the second setting element (DS I) and can be made to act on the emerging parison (22) as the last means of influencing the wall thickness.

6. Device according to Claim 4 or 5, **characterized in that** the lower inner edge of the third setting element (DS II), which can be brought into engagement with the emerging preform (22), is arranged approximately at the same height or slightly above the lower outer edge of the central mandrel (D 0).

7. Method for producing hollow bodies from thermoplastic material according to Claim 1, **characterized in that** a tubular preform (22) forced out from an annular extrusion die is inflated in a blow mould, the tubular preform (22) being set to a uniformly increasing wall thickness by means of corresponding die control in the axial direction, set to a greater wall thickness by means of corresponding die control in the regions of the parison with the highest degrees of stretching for the regions of the container of the upper and lower ends, lying at 90° to the mould parting plane, and inwardly and/or outwardly pronounced longitudinal ribs being set by means of corresponding die control in the tubular preform (22) in such a way that the finished container blow-moulded in a blow mould with a smooth surface for the lateral or vertical wall regions has at least in the vertical container wall adjacent strip-shaped wall regions with different wall thicknesses running parallel in the axial direction.

8. Method for producing hollow bodies from thermoplastic material according to Claim 1, **characterized in that** a tubular preform (22) forced out from an annular extrusion die is inflated in a blow mould, the tubular preform being set to a uniformly increasing wall thickness by means of corresponding die control in the axial direction, set to a greater wall thickness by means of corresponding die control in the regions of the parison with the highest degrees of stretching for the regions of the container of the upper and lower ends, lying at 90° to the mould parting plane, in order to achieve a wall thickness that is the same to the greatest extent in the finished blow-moulded hollow body, and at least one further partial enlargement of the parison wall thickness being set by means of a corresponding third die control in the tubular preform (22), in order to achieve a thick point with an additional polymer material requirement in the finished blow-moulded hollow body in the axial or vertical wall region, such as for example for a lateral bung-opening connector in the case of a plastic fuel tank or a lateral grip formation or carrying handle securement in the case of an upright canister.

9. Method according to Claim 7 or 8, **characterized in that** a multiplicity of spaced-apart ribs (48) are formed at least in the vertical walls exclusively on the inner side of the wall, the wall being formed such that it is uniformly smooth on the outside.

10. Method according to Claim 7, 8 or 9, **characterized in that** adjacent wall regions alternately have a different wall thickness, the transitions from thinner to thicker wall and vice versa being formed such that they increase and decrease in a wave form with a uniform curve profile on the inner side of the wall.

11. Method according to Claim 7, 8, 9 or 10, **characterized in that** the wall thickness of the thicker strip-shaped wall regions is formed such that they are equally thick and the wall thickness of the thinner strip-shaped wall regions is formed such that they are equally thin.

12. Method according to one of the preceding Claims 7 to 11, **characterized in that** the width of a thinner wall region between two ribs is approximately at least twice or a multiple of the width of a rib.

13. Method according to one of the preceding Claims 7 to 12, **characterized in that** the ratio of the heights of elevations A to the thinner wall regions B is between A(H) : B(H) = 1.1 : 1 and 1.5 : 1.

14. Method according to one of the preceding Claims 7 to 13, **characterized in that** the number of ribs in the case of a container diameter of about 590 mm is between 20 and 60, preferably about 32.

15. Method according to one of the preceding Claims 7 to 14, **characterized in that**, in the case of rectangular containers, at least one or more ribs are formed in each corner region, the ribs being formed such that they are made to extend upwards and/or downwards beyond the vertical wall into the horizontal regions of the container.

16. Method according to one of the preceding Claims 7 to 14, **characterized in that**, in the case of rectangular containers, at least one or more ribs (78) are formed in each planar wall region with the exception of the corner regions, the ribs being formed such that they are made to extend upwards and/or downwards beyond the vertical wall into the horizontal regions of the container.

## Revendications

1. Procédé de fabrication de corps creux soufflés en matière plastique, consistant à extruder une ébauche tubulaire chaude déformable (22) en matière thermoplastique d'une filière annulaire réglable d'un dispositif d'extrusion (10) et à la conduire entre les moitiés ouvertes d'un moule de soufflage, dans lequel, après fermeture du moule de soufflage, l'ébauche est soufflée en un corps creux fini, sous l'effet d'un fluide gazeux sous pression, alors que pendant l'extrusion de l'ébauche tubulaire (22)
- au moyen d'un premier élément de réglage (D 0) disposé dans la fente de tuyère (20), sur la filière annulaire du dispositif d'extrusion (10), l'épaisseur de paroi de l'ébauche extrudée (22) étant augmentée sur sa longueur,
- au moyen d'un deuxième élément de réglage (DS I) qui entoure la fente de tuyère, sur la filière annulaire du dispositif d'extrusion (10), dans au moins deux différentes zones de longueur, un réglage partiellement différent de l'épaisseur de paroi de l'ébauche extrudée (22) étant réalisé sur sa périphérie, **caractérisé en ce que**
- au moyen d'un troisième élément de réglage supplémentaire (DS II) qui entoure la fente de tuyère, sur la tuyère annulaire réglable du dispositif d'extrusion (10), on procède à un profilage particulier, avec un troisième réglage épais/mince de l'épaisseur de paroi de l'ébauche extrudée (22) sur des zones prédéfinissables de sa longueur et/ou de sa périphérie, de façon telle que pendant l'expulsion de l'ébauche tubulaire (22) sous l'influence séquentielle ou simultanée de trois différents éléments de réglage profilés (D 0, DS I, DS II), on procède à différents réglages se superposant partiellement d'une épaisseur de paroi différente de l'ébauche tubulaire (22).

2. Procédé selon la revendication 1, **caractérisé en ce que**
- au moyen d'un premier dispositif de réglage (D 0), par ouverture lente et constante de la section transversale de tuyère, on assure une augmentation continue sur sa longueur de l'épaisseur de paroi de l'ébauche extrudée (22),
- au moyen du deuxième dispositif de réglage (DS 1), dans au moins deux différentes zones de longueur de l'ébauche extrudée (22), par augmentation conséquente de la section transversale de tuyère, avec écoulement de matière plastique supplémentaire, on règle une épaisseur de paroi partiellement supérieure sur sa périphérie, et
- au moyen du troisième dispositif de réglage (DS II), par intervention active du coulisseau de tuyère réglable DS II avec profilage à dents/entredents, on procède à un réglage mince/épais de l'épaisseur de paroi, en créant des nervures longitudinales par refoulement latéral partiel de matière plastique dans la fente de tuyère.

3. Procédé selon la revendication 1, **caractérisé en ce que**
- au moyen d'un premier dispositif de réglage (D 0), par ouverture lente et constante de la section transversale de tuyère, on assure une augmentation continue sur sa longueur de l'épaisseur de paroi de l'ébauche extrudée (22),
- au moyen du deuxième dispositif de réglage (DS 1), dans au moins deux zones de longueur différentes de l'ébauche extrudée (22), par augmentation correspondante de la section transversale de tuyère, avec écoulement de matière plastique supplémentaire, on règle une épaisseur de paroi partiellement supérieure sur sa périphérie, et
- au moyen du troisième dispositif de réglage (DS II) par ouverture du coulisseau de tuyère réglable DS II avec un profilage particulier, par augmentation partielle de la section transversale de tuyère avec écoulement de matière plastique supplémentaire, on procède à une augmentation partielle de l'épaisseur de paroi, en créant au moins une zone épaisse supplémentaire sur au moins un endroit prédéfinissable de sa longueur et/ou de sa périphérie.

4. Dispositif pour la fabrication de corps creux soufflés en matière plastique, avec une tête d'extrusion (10) pour créer une ébauche tubulaire (22), avec une tuyère annulaire réglable de sortie du tube, avec au moins trois éléments de réglage séparés, avec différents profilages et interchangeables de la tuyère/la fente de carotte permettant un réglage adéquat de la fente de tuyère pour modifier l'épaisseur de paroi de l'ébauche sortante (22), **caractérisé en ce qu'**un premier élément de réglage de la tuyère (D 0) est disposé dans la fente annulaire et un deuxième et un troisième élément de réglage (DS I; DS II) sont disposés à l'éxtérieur de la fente de tuyère, les trois éléments de réglage (D 0, DS I, DS II) étant conçus en version réglable individuellement et étant équipés par ailleurs à chaque fois d'un entraînement de réglage.

5. Dispositif selon la revendication 4, **caractérisé en ce que** le troisième élément de réglage supplémentaire (DS II) est disposé sous le deuxième élément de réglage (DS I), pour le réglage d'un profilage particulier et peut entrer en action sur le tube sortant (22), en tant que dernière influence sur l'épaisseur de paroi.

6. Dispositif selon la revendication 4 ou 5, **caractérisé en ce que** l'arête inférieure interne du troisième élément de réglage (DS II) qui peut s'engager sur l'ébauche sortante (22) est placée approximativement à la même hauteur ou légèrement au-dessus de l'arête inférieure externe de la carotte centrale (D 0).

7. Procédé de fabrication de corps creux en matière thermoplastique selon la revendication 1, **caractérisé en ce qu'**on souffle une ébauche tubulaire (22) pressée hors d'une tuyère d'extrusion annulaire dans un moule de soufflage, l'ébauche tubulaire (22) étant réglée par contrôle correspondant de la tuyère en direction axiale à une épaisseur de paroi régulièrement croissante, au moyen d'un contrôle correspondant de la tuyère, étant réglée dans les zones tubulaires avec les degrés d'extension les plus élevés pour les zones de réservoir du fond supérieur et inférieur situées à 90° par rapport au plan de division du moule à une épaisseur de paroi supérieure et au moyen d'un contrôle correspondant de la tuyère, des nervures longitudinales étendues côté interne et/ou côté externe étant réglées dans l'ébauche tubulaire (22) de façon telle que le réservoir soufflé fini dans un moule à soufflage avec surface lisse pour les zones de paroi latérales ou verticales comporte au moins dans les parois verticales du réservoir des zones de paroi voisines en forme de bandes, s'étendant à la parallèle avec différentes épaisseurs de paroi.

8. Procédé de fabrication de corps creux en matière thermoplastique selon la revendication 1, **caractérisé en ce qu'**on souffle une ébauche tubulaire (22) pressée hors d'une tuyère d'extrusion annulaire dans un moule de soufflage, l'ébauche tubulaire (22) étant réglée par contrôle correspondant de la tuyère en direction axiale à une épaisseur de paroi régulièrement croissante, étant réglée dans les zones tubulaires avec les degrés d'extension les plus élevés pour les zones de réservoir du fond supérieur et inférieur situées à 90° par rapport au plan de division du moule à une épaisseur de paroi supérieure, pour obtenir dans le corps creux soufflé fini une épaisseur de paroi largement constante, et au moyen d'un troisième contrôle de tuyère correspondant, au moins une augmentation partielle supplémentaire de l'épaisseur de paroi du tube étant réglée dans l'ébauche tubulaire (22), pour obtenir dans le corps creux soufflé fini dans la zone de paroi axiale ou verticale une surépaisseur avec un besoin supplémentaire en matière plastique, comme par exemple pour une tubulure latérale d'ouverture de fût sur un conteneur à carburant en matière plastique (KKB) ou pour former une poignée latérale ou une fixation de poignée de manutention pour une nourrice de grand format.

9. Procédé selon la revendication 7 ou 8, **caractérisé en ce qu'**au moins dans les parois verticales, une pluralité de nervures (48) distancées l'une de l'autre est formée exclusivement sur la face interne de la paroi, la paroi étant conçue sous forme lisse uniforme sur l'extérieur.

10. Procédé selon la revendication 7, 8, ou 9, **caractérisé en ce que** des zones de paroi voisines présentent en alternance une épaisseur de paroi différente, les passages de la paroi plus mince à la paroi plus épaisse et inversement sur la face interne de paroi étant conçus sous forme ondulée croissante et décroissante, avec un trajet de courbe régulier.

11. Procédé selon la revendication 7, 8, 9 ou 10, **caractérisé en ce que** l'épaisseur de paroi des zones de parois plus épaisses en forme de bandes est d'épaisseur égale et l'épaisseur de paroi des zones de parois plus mince en forme de bandes est de minceur égale.

12. Procédé selon l'une quelconque des revendications précédentes 7 à 11, **caractérisé en ce que** la largeur d'une zone de paroi plus mince entre deux nervures correspond au moins au double, ou à un multiple de la largeur d'une nervure.

13. Procédé selon l'une quelconque des revendications précédentes 7 à 12, **caractérisé en ce que** le rapport de la hauteur des élévations A aux zones de parois plus minces B se situe entre A(H) : B(H) = 1,1 : 1 jusqu'à 1,5 : 1.

14. Procédé selon l'une quelconque des revendications précédentes 7 à 13, **caractérisé en ce que** le nombre des nervures pour un réservoir de diamètre de 590 mm se situe entre 20 et 60 et est de préférence de 32.

15. Procédé selon l'une quelconque des revendications précédentes 7 à 14, **caractérisé en ce que** sur des réservoirs de forme rectangulaire, au moins une ou plusieurs nervures sont conçues dans chaque zone d'angle, les nervures étant conçues en étant rallongées par delà la paroi verticale vers le haut ou/et vers le bas, dans les zones horizontales du réservoir.

16. Procédé selon l'une quelconque des revendications précédentes 7 à 14, **caractérisé en ce que** sur des réservoirs de forme rectangulaire, au moins une ou plusieurs nervures (78) sont conçues dans chaque zone de paroi plane, à l'exception des zones d'angles, les nervures étant conçues en étant rallongées par delà la paroi verticale vers le haut ou/et vers le bas, dans les zones horizontales du réservoir.
